# FASCICULE DE BREVET EUROPEEN

(11) **EP 4 274 753 B1**
(45) Date de publication et mention de la délivrance du brevet: **09.10.2024**
(21) Numéro de dépôt: 22703015.2
(22) Date de dépôt: 04.01.2022
(51) Int. Cl.: B64D 27/33, B64D 31/18, B64C 29/00, H02J 1/08, H02J 1/10, H02J 7/14, B64U 50/14, B64U 50/19, B64U 30/20, B64U 50/13

(54) **AERONEF A SOURCE D'ENERGIE HYBRIDE**
LUFTFAHRZEUG MIT HYBRIDER ENERGIEQUELLE
AIRCRAFT WITH HYBRID ENERGY SOURCE

(30) Priorité: 06.01.2021 FR 2100099
(43) Date de publication de la demande: 15.11.2023
(73) Titulaire: Ascendance Flight Technologies, 31400 Toulouse (FR)
(72) Inventeur: DINEL, Clément, 31400 Toulouse (FR); FERRAN, Benoît, 31400 Toulouse (FR)
(74) Mandataire: Cabinet Netter
(86) Numéro de dépôt international: PCT/FR2022/050014
(87) Numéro de publication internationale: WO 2022/148926

(56) Documents cités:
- EP-A1- 3 296 212
- EP-A1- 3 628 593
- FR-A1- 3 095 806
- US-B1- 6 293 491

## Description

L'invention concerne le domaine des aéronefs et plus particulièrement le domaine des aéronefs à motorisation électriques et à décollage et atterrissage vertical.

Le domaine de l'aéronautique connaît actuellement de nombreux bouleversements, en partie en rapport avec l'évolution des exigences liées à l'environnement, et en partie en rapport avec le développement d'aéronefs à motorisation électrique. En particulier, le domaine des VTOL (pour Vertical Take-Off and Landing en anglais ou avion à décollage et atterrissage vertical) est particulièrement dynamique car il offre des prospects très intéressants en tant que nouveau moyen de mobilité.

Le document US 6 293 491 B1 divulgue un aéronef à source d'énergie hybride comprenant deux propulseurs d'entraînement horizontal alimentés chacun par un moteur électrique respectif, formant deux groupes d'entraînement horizontal respectifs; huit paires de rotors de décollage/ atterrissage vertical, chacun alimenté par un moteur électrique respectif; une source d'électricité, et deux sources de génération électrique. D'autres aéronefs à source d'énergie hybride sont connus des documents EP 3 296 212 A1 et FR 3 095 806 A1.

Les VTOL sont un domaine en soi assez ancien (ils ont été développés dès 1921), mais leur électrification a fait exploser les nouvelles solutions proposées, ainsi que les règlementations. En particulier, les dernières règlementations (voir par exemple SC-VTOL-01 SPECIAL CONDITION Vertical Take-Off and Landing (VTOL) Aircraft ; émise le 2 juillet 2019) nécessitent une redondance de tous les systèmes liés à la motricité et au vol, des moteurs, aux sources d'énergie en passant par tout le système électrique pour permettre d'assurer une continuité du vol (appelée en anglais "*continued safe flight and landing*") et pas uniquement un atterrissage d'urgence suite à la survenance d'une panne. Cela est également appelé *"one-fail-safe"* en anglais, c'est-à-dire « tolérant à une panne simple ».

Ces règlementations posent de nombreux problèmes, en particulier concernant la faisabilité tout en maintenant un coût raisonnable. En effet, si tous les éléments sont doublés, alors les coûts sont plus que doublés car il faut surdimensionner pour gérer le poids en plus, sans compter que cela veut également dire revoir toutes les capacités de vol de l'aéronef ainsi alourdi.

Il faut donc trouver d'autres solutions. La plupart des solutions reposent sur deux principes, éventuellement utilisés ensemble :
- une gestion extrêmement sophistiquée de l'énergie au niveau des packs de batterie, avec un module dédié qui gère en détail le point de fonctionnement de ceux-ci. Le document US 9 586 690 décrit ce type de solution.
- l'utilisation d'une source de génération d'électricité pour alimenter les propulseurs horizontaux, afin de ne solliciter les batteries que lors du décollage et de l'atterrissage, ce qui permet d'augmenter le rayon d'action et l'endurance des solutions à moteurs électriques. Le document WO 2020/016510 et le document EP 3 628 593 décrivent ce type de solution.

Cependant, ces solutions ne donnent pas entière satisfaction, et en particulier ne permettent pas d'obtenir une solution one-fail-safe.

L'invention vient améliorer la situation. À cet effet, elle propose un aéronef à source d'énergie hybride comprenant au moins deux propulseurs d'entraînement horizontal alimentés chacun par un moteur électrique respectif, formant au moins deux groupes d'entraînement horizontal respectifs, au moins quatre paires de rotors de décollage/atterrissage vertical chacun alimenté par un moteur électrique respectif, et au moins quatre sources d'électricité chacune reliée à un moteur électrique respectif d'une paire de rotors de décollage/atterrissage vertical, chaque paire de rotors formant avec les moteurs électriques respectifs et la source d'électricité correspondants un groupe d'entraînement vertical, chaque groupe d'entraînement vertical comprenant un bus d'alimentation électrique dont la sortie peut être reliée à un unique groupe d'entraînement horizontal, le nombre de groupes d'entraînement vertical étant tel que chaque groupe d'entraînement horizontal peut être relié à au moins deux groupes d'entraînement vertical via un commutateur respectif disposé en entrée du groupe d'entraînement horizontal, au moins deux sources de génération électrique, chacune reliée d'une part à chacun des bus d'alimentation électrique par une entrée respective du groupe d'entraînement vertical correspondant, et d'autre part à chaque groupe d'entraînement horizontal via la sortie respective de chaque groupe d'entraînement vertical, au moins une commande d'alimentation électrique agencée pour émettre une commande de puissance aux sources de génération électrique en fonction des besoins en puissance des groupes d'entraînement vertical et/ou des groupes d'entraînement horizontal, les sources d'électricité fournissant de l'électricité en fonction de la différence entre les besoins en puissance des groupes d'entraînement vertical et/ou des groupes d'entraînement horizontal et la puissance émise par les sources de génération électrique sur la base de la commande de puissance, les sources de génération électrique étant en outre propres à recharger les sources d'électricité, de sorte que les sources d'électricité sont commandées de manière passive.

Cet aéronef est particulièrement avantageux car son architecture permet de créer de la redondance garantissant le one-fail-safe tout en optimisant le dimensionnement des éléments. Ainsi, l'aéronef selon l'invention minimise les surcoûts liés à la mise en oeuvre du one-fail-safe et met en oeuvre une architecture réellement hybride dans laquelle les sources d'électricité sont réellement complémentaires à chaque étape du vol.

Selon divers modes de réalisation, l'invention peut présenter une ou plusieurs des caractéristiques suivantes :
- les sources d'électricité des groupes d'entraînement vertical sont des batteries,
- les sources de génération électrique comprennent un générateur à turbine et un convertisseur de courant alternatif vers continu,
- les sources de génération électrique comprennent une pile à combustible hydrogène et un convertisseur de courant continu vers continu,
- l'aéronef comprend en outre des contacteurs électriques reliant chacun des groupes d'entraînement horizontal, des groupes d'entraînements vertical et des sources de génération électrique au reste du circuit électrique de l'aéronef,
- chaque élément de chacun des groupes d'entraînement horizontal, des groupes d'entraînements vertical et des sources de génération électrique est relié aux autres éléments du groupe d'entraînement horizontal, du groupe d'entraînements vertical ou de la source de génération électrique auquel il appartient par un contacteur électrique,
- l'aéronef comprend en outre des diodes en entrée et/ou en sortie de chacun des groupes d'entraînement horizontal, des groupes d'entraînements vertical et des sources de génération électrique les reliant aux bus électriques les reliant, et
- les diodes sont disposées en amont des contacteurs par rapport aux sources de génération électrique.

D'autres caractéristiques et avantages de l'invention apparaîtront mieux à la lecture de la description qui suit, tirée d'exemples donnés à titre illustratif et non limitatif, tirés des dessins sur lesquels :
[Fig.1] La figure 1 représente une vue schématique de l'architecture électrique d'un aéronef selon l'invention,
[Fig.2] La figure 2 représente un exemple de séquence de vol indiquant quels sont les éléments actifs dans quelle phase et quels sont les niveaux de charge électrique associés,
[Fig.3] La figure 3 représente un exemple de configuration en cas de perte d'un groupe d'entraînement vertical pendant un décollage ou un atterrissage,
[Fig.4] La figure 4 représente un exemple de configuration en cas de perte d'une source de génération électrique,
[Fig.5] La figure 5 représente un exemple de configuration en cas de perte d'un groupe d'entraînement horizontal, et
[Fig.6] La figure 6 représente un exemple d'un algorithme de gestion de commande de puissance mis en oeuvre par l'aéronef.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

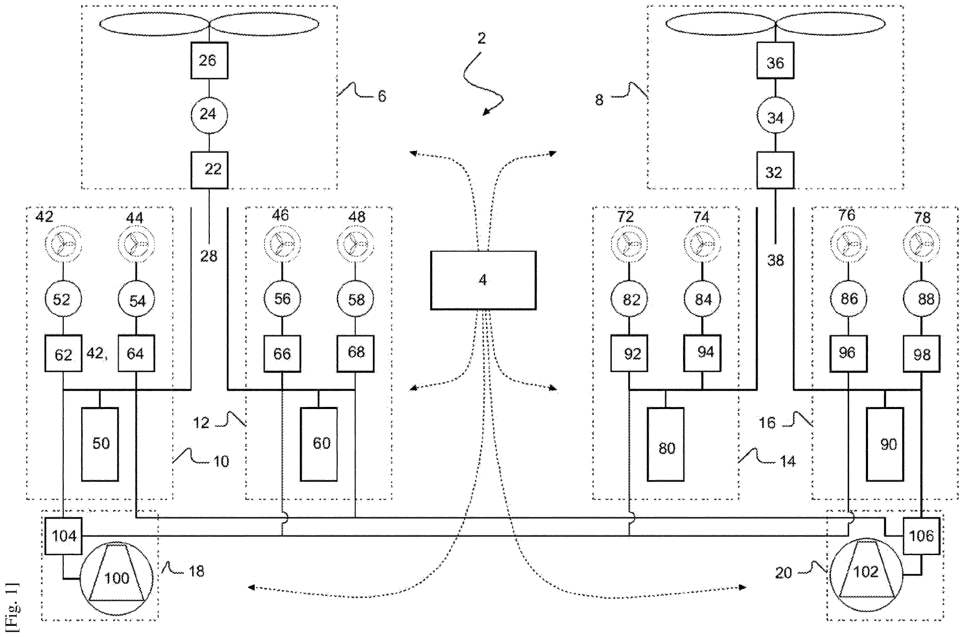

Comme on peut le voir sur la Figure 1, un aéronef 2 selon l'invention comprend une commande 4 deux groupes d'entraînement horizontal 6 et 8, quatre groupes d'entraînement vertical 10, 12, 14 et 16, et deux sources de génération électrique 18 et 20.

Dans l'exemple décrit ici, le groupe d'entraînement horizontal 6 (respectivement 8) comprend un convertisseur de courant continu vers alternatif 22 (respectivement 32), un moteur électrique 24 (respectivement 34) et un propulseur 26 (respectivement 36), par exemple à hélice. Le propulseur 26 (respectivement 36) est agencé pour permettre à l'aéronef d'avancer dans une direction sensiblement horizontale. Dans l'exemple décrit ici, le propulseur 26 (respectivement 36) consomme en régime de vol une puissance de 80kW.

Le groupe d'entraînement horizontal 6 (respectivement 8) est relié en entrée à un commutateur 28 (respectivement 38) qui permet de relier cette entrée à la sortie du groupe de d'entraînement vertical 10 (respectivement 14) ou 12 (respectivement 16), comme décrit plus bas.

Le groupe d'entraînement vertical 10 (respectivement 12, 14, 16) comprend un rotor 42 (respectivement 46, 72, 76) entraîné par un moteur 52 (respectivement 56, 82, 86), un rotor 44 (respectivement 48, 74, 78) entraîné par un moteur 54 (respectivement 58, 84, 88). Les moteurs 52 et 54 sont alimentés par un convertisseur de courant continu vers alternatif respectif 62 et 64 (respectivement 66 et 68, 92 et 94, 96 et 98). Les convertisseurs de courant continu vers alternatif 62 et 64 (respectivement 66 et 68, 92 et 94, 96 et 98) sont reliés à un bus électrique du groupe d'entraînement vertical 10 (respectivement 12, 14, 16), auquel est relié une batterie 50 (respectivement 60, 80, 90) ainsi qu'une entrée reliée à un bus électrique de distribution de la source de génération électrique 18, une entrée reliée à un bus électrique de distribution de la source de génération électrique 20. Enfin le bus électrique de chacun des groupes d'entraînement vertical 10 et 12 (respectivement 14 et 16) est relié à une sortie respective de ces derniers, laquelle est reliée au commutateur 28 (respectivement 38). Comme on le verra plus bas, les batteries 50, 60, 80 et 90 délivrent ensemble 600kW lorsqu'elles délivrent 100% de leur capacité.

Dans l'exemple décrit ici, chaque source de génération électrique 18 (respectivement 20) comprend d'une part un générateur à turbine 100 (respectivement 102) et un convertisseur de courant alternatif vers continu 104 (respectivement 106). Dans l'exemple décrit ici, chaque générateur à turbine peut délivrer 40kW à 100% de sa capacité. En variante, les sources de génération électrique pourraient être d'autres sources de production d'électricité, à courant continu ou alternatif suivi d'un convertisseur de courant alternatif vers continu ou d'un convertisseur de courant continu vers continu. Ainsi, ces sources pourraient être basées sur des turbogénérateurs alimentés par du carburant conventionnel, du biocarburant, ou des fuels synthétiques. Toujours en variante, une source d'énergie à base d'hydrogène, comme une pile à combustible pourrait être utilisée.

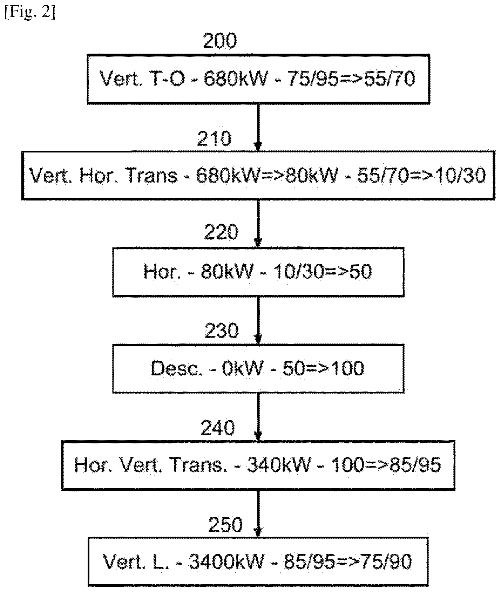

Comme on le verra plus bas, la commande 4 est un appareil basse tension agencé pour commander d'une part les sources de génération électrique 18 et 20, d'autre part les commutateurs 28 et 38, ainsi que divers éléments de protection non représentés sur la Figure 1 qui seront expliqués plus avant avec les figures 2 à 6.

Lorsque l'on analyse la Figure 1, il apparaît que tous les éléments moteurs et électriques sont dédoublés. Ainsi, le one-fail-safe peut être assuré comme cela sera décrit par la suite. En effet, il y a deux groupes d'entraînement horizontal, quatre groupes d'entraînement vertical eux-mêmes formant deux sous-groupes reliés à un même groupe d'entraînement horizontal, et deux sources de génération électrique.

Mais au-delà de cette duplication assez classique, ce sont les bus électriques propres à chaque groupe d'entraînement vertical, ainsi que le bus électrique de distribution propre à chaque source de génération électrique qui permettent d'obtenir ensemble les bénéfices de l'invention.

En effet, comme on le verra plus bas, la structure particulière de l'aéronef de la Figure 1 permet d'avoir une réelle hybridation des sources d'énergie électrique, par opposition aux solutions existantes dans lesquelles il s'agit d'une juxtaposition. Ainsi, selon les besoins en puissance, tant les batteries que les sources de génération électrique peuvent fonctionner de concert. Mais au-delà de cela, cette architecture permet de traiter les batteries comme de purs « tampons d'énergie » (tampon au sens « buffer » en anglais). Les batteries sont traitées de manière totalement passives, sans aucun besoin d'intelligence logicielle ou matérielle autre que l'intelligence basique requise pour faire fonctionner le système batterie en lui-même BMS (Battery Management System), par exemple pour activer les protections et remonter le statut. Cela va totalement à l'encontre de toutes les solutions existantes, dans lesquelles, soit un élément est spécifiquement prévu pour optimiser le fonctionnement des batteries, et joue un rôle de commande, soit un élément est prévu pour compenser une éventuelle faiblesse des batteries, mais en alternance exclusive, c'est-à-dire sans que les batteries et cet élément soient susceptibles de fonctionner simultanément.

La Figure 2 représente un cycle de consommation d'énergie lors d'un vol avec un aéronef de la Figure 1. Comme on peut le voir sur cette figure, le vol commence par une première opération 200 dans laquelle l'aéronef décolle de manière verticale. Dans cette phase, les rotors des groupes d'entraînement vertical fonctionnement et constituent la majeure partie de l'énergie consommée - les groupes d'entraînement horizontal sont susceptibles de fonctionner pour des raisons de stabilité, mais avec une consommation énergétique négligeable. Ils sont alimentés à hauteur de 600kW par les batteries et à hauteur de 80kW par les sources de génération électrique. Ainsi, les batteries, remplies entre 75% et 90% au début du vol, passent à 55% à 70% de leur capacité. À la fin de cette phase, l'aéronef est à environ 50 pieds de son point de décollage, soit 15m de dénivelé environ.

Ensuite, dans une opération 210, l'aéronef passe progressivement du vol vertical vers le vol horizontal entre 50 pieds et 150 pieds, puis l'aéronef réalise une ascension semblable à celle des avions traditionnels. Dans cette phase, les rotors sont progressivement arrêtés, et la consommation passe de 680kW à 80kW une fois la croisière horizontale atteinte. Les batteries et les sources de génération électrique continuent de travailler à plein régime, et les batteries continuent de se vider, jusqu'à 10% à 30% lorsque la phase de croisière horizontale est atteinte.

Le vol à l'horizontale se fait dans une opération 220 durant laquelle les batteries ne sont pas sollicitées. Les sources de génération électrique continuent de tourner à plein régime et les 80kW qu'elles produisent sont partagées entre les groupes d'entraînement horizontal qui sont commandés par la commande, et la puissance non consommée par ces derniers est utilisée pour recharger les batteries. Cette phase, à plus de 1000 pieds d'altitude (environ 300m), permet de recharger les batteries à environ 50%.

La descente vient ensuite dans une opération 230, dans laquelle les sources de génération électrique sont utilisées à 100% pour recharger les batteries. Cela permet de recharger les batteries à 100%. Dans cette phase, aucun élément moteur ne consomme d'énergie.

La transition du vol horizontal vers vertical est ensuite réalisée dans une opération 240, dans laquelle la consommation passe progressivement jusqu'à environ 340kW, et dans laquelle la charge des batteries passe progressivement de 100% à entre 85% et 95%.

Enfin, dans une opération 250, l'atterrissage vertical est réalisé en sollicitant uniquement les rotors, comme pour le décollage, mais avec l'avantage de profiter de la gravité. Ainsi, les batteries continuent de se décharger jusqu'à entre 75% et 90%, comme on point de départ de l'opération 200.

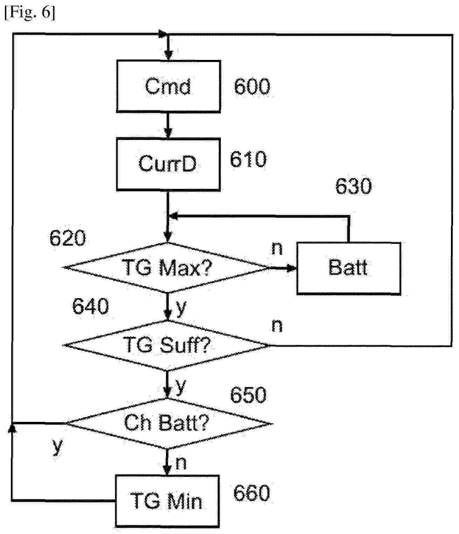

Il apparaît donc que l'aéronef n'a pas besoin d'être rechargé au sol entre deux vols, ce qui augmente son utilisabilité. De plus, il apparaît pleinement que les sources de génération électrique fonctionnent toujours à plein (il existe un cas d'exception qui apparaîtra avec la Figure 6), et que les batteries servent à compenser les cas où les sources de génération électrique ne peuvent pas fournir assez de puissance. De même, dès que cela est possible, les batteries sont rechargées autant que possible afin de garantir d'avoir assez d'énergie électrique pour atterrir.

En variante, les batteries de l'aéronef peuvent être rechargées au sol entre deux vols suffisamment écartés dans le temps. Dans ce cas, la commande 4 peut réaliser des arbitrages plus sophistiqués sur l'alimentation pendant les diverses phases, soit pour augmenter les points de fonctionnement des générateurs à turbine pour modifier la répartition de fourniture de l'énergie et augmenter le rayon d'action, limiter les nuisances sonores, les émissions polluantes, etc.

La commande des batteries est gérée de manière passive grâce à l'architecture de l'invention - si les rotors ou les groupes d'entraînement horizontal tirent moins de 80kW, alors les batteries ne sont naturellement pas sollicitées, et le surplus de courant peut même être utilisé pour les recharger (comme dans l'opération 220 ou 230) ; si plus de puissance est demandé, alors les batteries sont naturellement sollicitées.

Il apparaît également, que le surdimensionnement des batteries peut être gardé assez bas grâce à l'architecture de l'invention. En effet, ce n'est pas un hasard s'il reste entre 10% à 30% de charge dans les batteries à la fin de l'opération 220 - cela garantit de pouvoir tenir le one-fail-safe avec une panne éliminant une batterie.

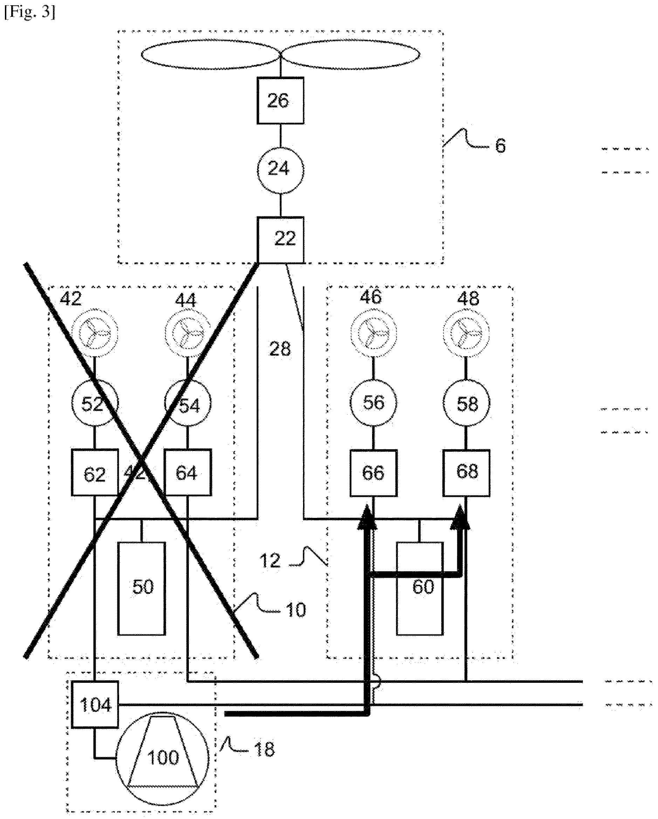

La Figure 3 représente un cas de panne d'une batterie ou d'un autre élément électrique d'un des groupes d'entraînement vertical. Par souci de simplicité, seule l'énergie sortant de la source de génération électrique 18 et du groupe d'entraînement vertical 12 sont représentés, mais les autres éléments fonctionnent de manière similaire.

Dans le cas représenté, le premier groupe d'entraînement vertical 10 est mis hors circuit pour cause de panne électrique d'un des moteurs 52 ou 54. Cela est particulièrement handicapant pendant l'une des opération 200, 210, 240 ou 250.

Tout d'abord, il faut noter que chaque élément électrique est protégé par un contacteur qui peut être commandé pour l'isoler du reste du circuit. Ainsi, dans ce mode de réalisation deux contacteurs non représentés au niveau des entrées reliées aux bus électrique de distribution propre à chaque source de génération permettent d'isoler le groupe d'entraînement vertical 10 (respectivement 12, 14, 16) et d'éviter toute propagation de problème électrique depuis l'extérieur vers le groupe d'entraînement vertical 10 (respectivement 12, 14, 16). Cela est également le cas pour les groupes d'entraînement horizontal avec les commutateurs 28 et 38 ainsi qu'avec les sources de génération électrique avec des commutateurs non représentés. De plus, chaque élément à l'intérieur de ces sous-ensembles électriques sont également reliés au reste du sous-ensemble électrique auquel il appartient par le biais d'un commutateur non représenté, de sorte que, si par exemple la batterie 50 dysfonctionne, celle-ci peut être coupée du reste du groupe d'entraînement vertical 10 sans immédiatement déconnecter celui-ci.

Dans l'exemple décrit ici, les contacteurs sont doublés par la présence de diodes (non représentées) qui permettent, en cas de problème électrique et notamment d'un court-circuit, d'isoler le groupe d'entraînement vertical de manière passive pour empêcher toute propagation de problème électrique depuis le groupe d'entraînement vertical 10 (respectivement 12, 14, 16) vers l'extérieur.

De plus, les batteries 50, 60, 80 et 90 sont surdimensionnées. Simultanément, la commande 4 assure que le commutateur 28 vient se brancher sur la sortie du groupe d'entraînement vertical 12. Les batteries sont donc alors sollicitées à hauteur de 100kW. De plus, les sources de génération électrique peuvent être sollicitées au-delà de leur point de fonctionnement classique et être sollicitées à 110% ou 120% pendant quelques minutes. Cela et la sur sollicitation des batteries permet de compenser la perte de 80kW liée à la déconnexion du groupe d'entraînement vertical 10. Le chemin suivi par l'électricité sortant de la source de génération électrique 18 est représenté par des flèches en gras.

Ainsi, le décollage (ou un atterrissage d'urgence) sont garantis et peuvent être réalisés sans risque, au prix d'un surdimensionnement léger des batteries.

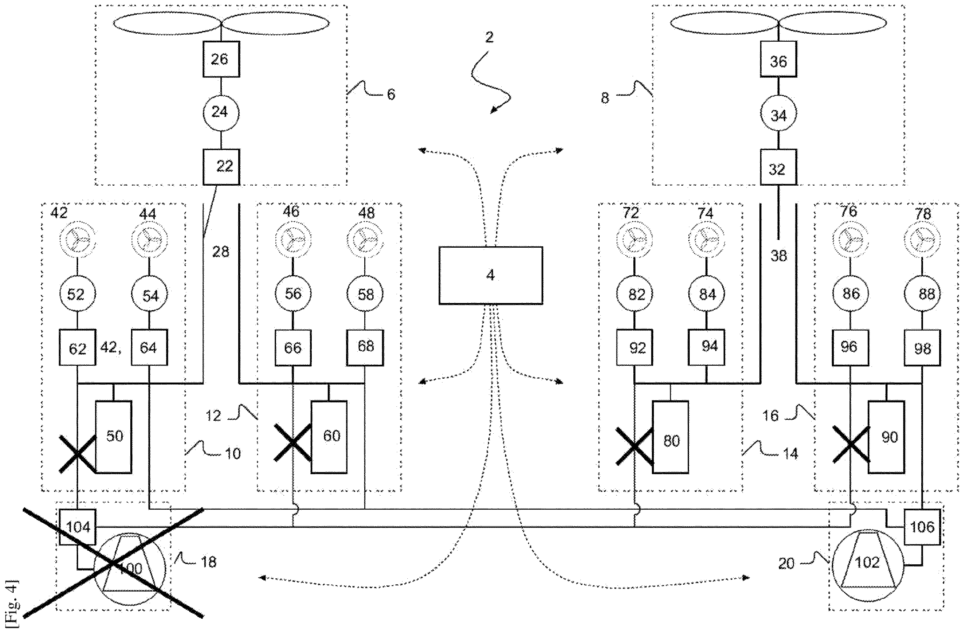

La Figure 4 représente un cas de panne différent dans lequel une des sources de génération électrique est perdue. Là encore, seuls certains éléments énergétiques sont représentés, mais les autres fonctionnent de manière similaire.

Comme on le voit sur cette figure, les entrées des groupes d'entraînement vertical reliées au bus électrique de distribution de la source de génération électrique 10 sont isolées grâce à des contacteurs ouverts par la commande 4. De plus, la source de génération électrique restante est sollicitée au-delà de son point de fonctionnement classique, et batteries sont mises à contribution afin de maintenir une fourniture de puissance de l'ordre de 70kW soit 90% de la puissance normalement consommée par les groupes d'entraînement horizontal.

Là encore, le one-fail-safe est garanti, puisque les batteries pourront être rechargées dans la phase de descente avant l'atterrissage. De plus, le surdimensionnement de 25% des batteries garantit d'avoir suffisamment d'énergie pour continuer le vol horizontal à 90% des capacités normales.

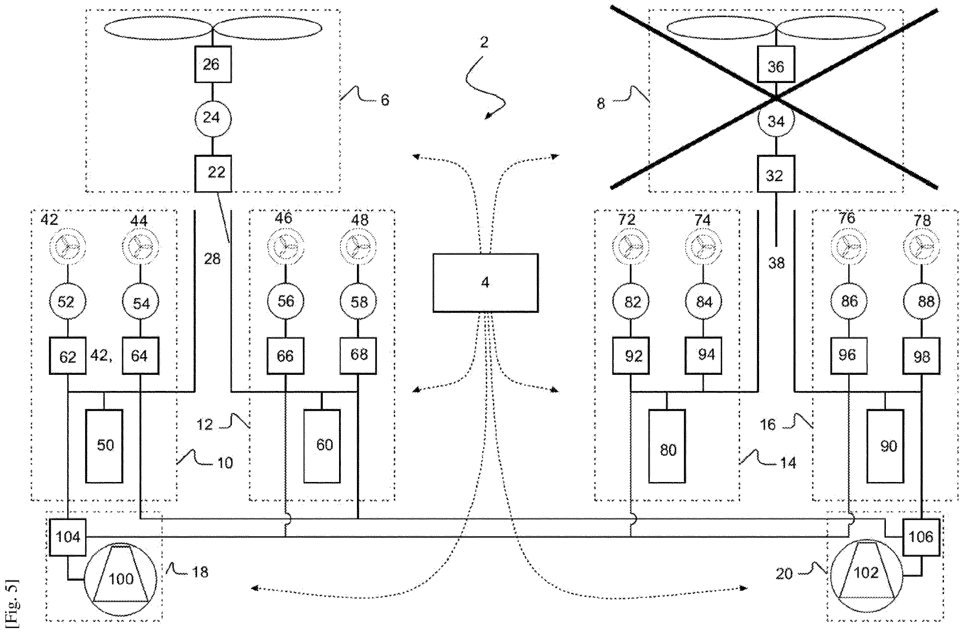

La Figure 5 montre encore un cas de panne différent dans lequel c'est cette fois un groupe d'entraînement horizontal qui est perdu. Dans ce cas, le groupe d'entraînement horizontal restant est sollicité au maximum de ses capacités afin de maintenir une croisière horizontale présentant un profil d'altitude et de vitesse tenant compte de la perte. Les batteries peuvent être utilisées comme tampon en cas de surconsommation soudaine.

La Figure 6 montre un algorithme qui peut être mis en oeuvre par la commande 4 pour gérer la commande de puissance en fonction des divers moments.

Il s'agit d'un cycle qui part dans une opération 600 de la réception d'un point de fonctionnement pour les rotors et/ou les propulseurs.

Ensuite, dans une opération 610, les rotors et/ou les propulseurs appellent un courant correspondant à ce point de fonctionnement. Cette opération est suivie d'un test dans une opération 620 pour déterminer si générateur à turbine est commandé à 100% ou pas. Si c'est n'est pas le cas, alors la commande 4 pousse celui-ci à fond, et, pendant qu'il augmente son régime, les batteries compensent le besoin en courant dans une opération 630. Si le générateur à turbine est poussé à fond, alors dans une opération 640, la commande 4 détermine si sa production suffit à l'appel de courant de l'opération 610. Si ce n'est pas le cas, alors la sollicitation à fond est maintenue jusqu'au prochain point de fonctionnement, et les batteries sont sollicitées. Si c'est le cas, alors dans une opération 650, la commande 4 vérifie si les batteries ont besoin d'être chargées. Si c'est le cas, alors la sollicitation à fond est maintenue et l'excédent de puissance est utilisé pour charger les batteries jusqu'au point de fonctionnement suivant. Sinon, alors la commande 4 réduit le point de fonction du générateur à turbine dans une opération 660, jusqu'au prochain point de fonctionnement.

Dans ce qui précède, les consommations de puissance ont été données à titre purement indicatif et non limitatif. Il conviendra d'adapter l'architecture électrique en fonction des besoins réels liés aux vols de l'aéronef.

Il apparaît de ce qui précède que les sources d'électricité sont du type forte puissance / faible capacité, tandis que les sources de génération électrique sont du type forte capacité / faible puissance. Cela découle du fait que les sources d'électricité sont utilisées comme tampons d'énergie et que les sources de génération électrique sont dimensionnées en regard des consommations du vol horizontal et pour permettre de recharger les tampons d'énergie.

Cette dualité, mise en oeuvre grâce à l'architecture décrite plus haut selon laquelle tous les circuits électriques sont reliés entre eux tout en étant rendus indépendants par des protections, permet de créer de la redondance garantissant le one-fail-safe tout en optimisant le dimensionnement des éléments. Ainsi, l'aéronef selon l'invention minimise les surcoûts liés à la mise en oeuvre du one-fail-safe et met en oeuvre une architecture réellement hybride dans laquelle les sources d'électricité sont réellement complémentaires à chaque étape du vol.

Il convient également de noter que les figures représentent des schémas électriques de l'aéronef. Ainsi, malgré le fait que les rotos 42 et 44, 46 et 48, 52 et 54, 56 et 58 sont représentés côte à côte, cela ne sera pas forcément le cas d'un point de vue mécanique. En effet, les rotors sont assemblés par paire dans un groupe d'entraînement vertical de sorte à ce qu'une panne n'entraîne pas une déstabilisation de l'aéronef. Les rotors d'un même groupe d'entraînement vertical seront donc généralement disposés de manière symétrique par rapport au centre de l'aéronef.

De plus, bien que les figures représentent un aéronef avec 2 propulseurs, 8 rotors et 2 générateurs à turbine, leur nombre peut être différent. En effet, il peut y avoir plus de 2 propulseurs, et il peut y avoir plus de deux groupes d'entraînement vertical par groupe d'entraînement horizontal. De même, la commande 4 peut également être doublée afin d'assurer un degré supplémentaire de résilience.

Enfin, le fait qu'un groupe d'entraînement vertical donné ne peut être relié qu'à un groupe d'entraînement horizontal permet de simplifier la commande de l'architecture. En effet, ce principe permet de contrôler la redondance et le dimensionnement par le nombre de groupes d'entraînement vertical différents reliés à un même groupe d'entraînement horizontal. Et la résilience est organisée par les commutateurs des groupes d'entraînement horizontal, ce qui peut être réalisé de manière simple. Cela est beaucoup plus efficace que dans un schéma dans lequel un groupe d'entraînement vertical pourrait être relié à plusieurs groupes d'entraînement horizontal, ce qui poserait des problèmes conséquents de commande, tant en régime permanent qu'en régime dégradé.

En variante, comme suggéré plus haut, l'aéronef pourrait être chargé au sol, de sorte que les sources d'électricité soient remplies à 100% au décollage. Cela permet alors de mettre en oeuvre d'autres schémas de vol, en augmentant le rayon d'action de l'aéronef, Ainsi que de limiter les émissions sonores et les émissions de polluants lors des phases de décollages et atterrissages à basse altitude.

## Revendications

1. Aéronef à source d'énergie hybride comprenant :
- au moins deux propulseurs d'entraînement horizontal (26, 36) alimentés chacun par un moteur électrique (24, 34) respectif, formant au moins deux groupes d'entraînement horizontal (6, 8) respectifs,
- au moins quatre paires de rotors (42, 44, 46, 48, 72, 74, 76, 78) de décollage/atterrissage vertical chacun alimenté par un moteur électrique (52, 54, 56, 58, 82, 84, 86, 88) respectif, et au moins quatre sources d'électricité (50, 60, 80, 90) chacune reliée à un moteur électrique (52, 54, 56, 58, 82, 84, 86, 88) respectif d'une paire de rotors (42, 44, 46, 48, 72, 74, 76, 78) de décollage/atterrissage vertical, chaque paire de rotors (42, 44, 46, 48, 72, 74, 76, 78) formant avec les moteurs électriques (52, 54, 56, 58, 82, 84, 86, 88) respectifs et la source d'électricité correspondants un groupe d'entraînement vertical (10, 12, 14, 16), chaque groupe d'entraînement vertical (10, 12, 14, 16) comprenant un bus d'alimentation électrique dont la sortie peut être reliée à un unique groupe d'entraînement horizontal (6, 8), le nombre de groupes d'entraînement vertical (10, 12, 14, 16) étant tel que chaque groupe d'entraînement horizontal (6, 8) peut être relié à au moins deux groupes d'entraînement vertical (10, 12, 14, 16) via un commutateur (28, 38) respectif disposé en entrée du groupe d'entraînement horizontal (6, 8),
- au moins deux sources de génération électrique (18, 20), chacune reliée d'une part à chacun des bus d'alimentation électrique par une entrée respective du groupe d'entraînement vertical (10, 12, 14, 16) correspondant, et d'autre part à chaque groupe d'entraînement horizontal (6, 8) via la sortie respective de chaque groupe d'entraînement vertical (10, 12, 14, 16),
- au moins une commande d'alimentation électrique (4) agencée pour émettre une commande de puissance aux sources de génération électrique (18, 20) en fonction des besoins en puissance des groupes d'entraînement vertical (10, 12, 14, 16) et/ou des groupes d'entraînement horizontal (6, 8), les sources d'électricité (50, 60, 80, 90) fournissant de l'électricité en fonction de la différence entre les besoins en puissance des groupes d'entraînement vertical (10, 12, 14, 16) et/ou des groupes d'entraînement horizontal (6, 8) et la puissance émise par les sources de génération électrique (18, 20) sur la base de la commande de puissance, les sources de génération électrique (18, 20) étant en outre propres à recharger les sources d'électricité (50, 60, 80, 90), de sorte que les sources d'électricité (50, 60, 80, 90) sont commandées de manière passive.

2. Aéronef selon la revendication 1, dans lequel les sources d'électricité (50, 60, 80, 90) des groupes d'entraînement vertical (10, 12, 14, 16) sont des batteries.

3. Aéronef selon la revendication 1 ou 2, dans lequel les sources de génération électrique (18, 20) comprennent un générateur à turbine (100, 102) et un convertisseur de courant alternatif vers continu (104, 106).

4. Aéronef selon la revendication 1 ou 2, dans lequel les sources de génération électrique (18, 20) comprennent une pile à combustible hydrogène (100, 102) et un convertisseur de courant continu vers continu (104, 106).

5. Aéronef selon l'une des revendications précédentes, comprenant en outre des contacteurs électriques reliant chacun des groupes d'entraînement horizontal (6, 8), des groupes d'entraînements vertical (10, 12, 14, 16) et des sources de génération électrique (18, 20) au reste du circuit électrique de l'aéronef.

6. Aéronef selon la revendication 5, dans lequel chaque élément de chacun des groupes d'entraînement horizontal (6, 8), des groupes d'entraînements vertical (10, 12, 14, 16) et des sources de génération électrique (18, 20) est relié aux autres éléments du groupe d'entraînement horizontal (6, 8), du groupe d'entraînements vertical (10, 12, 14, 16) ou de la source de génération électrique (18, 20) auquel il appartient par un contacteur électrique.

7. Aéronef selon l'une des revendications précédentes, comprenant en outre des diodes en entrée et/ou en sortie de chacun des groupes d'entraînement horizontal (6, 8), des groupes d'entraînements vertical (10, 12, 14, 16) et des sources de génération électrique (18, 20) les reliant aux bus électriques les reliant.

8. Aéronef selon la revendication 5 ou 6 prise en combinaison avec la revendication 7, dans lequel les diodes sont disposées en amont des contacteurs par rapport aux sources de génération électrique.

## Patentansprüche

1. Flugzeug mit einer hybriden Energiequelle, umfassend:
- mindestens zwei horizontale Antriebstriebwerke (26, 36), die jeweils von einem jeweiligen Elektromotor (24, 34) angetrieben werden und mindestens zwei jeweilige horizontale Antriebsgruppen (6, 8) bilden,
- mindestens vier Paare von vertikalen Start-/Landerotoren (42, 44, 46, 48, 72, 74, 76, 78), die jeweils von einem jeweiligen Elektromotor (52, 54, 56, 58, 82, 84, 86, 88) angetrieben werden, und mindestens vier Stromquellen (50, 60, 80, 90), die jeweils mit einem jeweiligen Elektromotor (52, 54, 56, 58, 82, 84, 86, 88) eines Paares von vertikalen Start-/Landerotoren (42, 44, 46, 48, 72, 74, 76, 78) verbunden sind, wobei jedes Rotorenpaar (42, 44, 46, 48, 72, 74, 76, 78) mit den entsprechenden jeweiligen Elektromotoren (52, 54, 56, 58, 82, 84, 86, 88) und der entsprechenden Stromquelle eine vertikale Antriebsgruppe (10, 12, 14, 16) bildet, wobei jede vertikale Antriebsgruppe (10, 12, 14, 16) einen Stromversorgungsbus umfasst, dessen Ausgang mit einer einzigen horizontalen Antriebsgruppe (6, 8) verbunden werden kann, wobei die Anzahl der vertikalen Antriebsgruppen (10, 12, 14, 16) derart ist, dass jede horizontale Antriebsgruppe (6, 8) mit mindestens zwei vertikalen Antriebsgruppen (10, 12, 14, 16) über einen jeweiligen Schalter (28, 38), der an einem Eingang der horizontalen Antriebsgruppe (6, 8) angeordnet ist, verbunden werden kann,
- mindestens zwei Stromerzeugungsquellen (18, 20), die jeweils einerseits mit jedem der Stromversorgungsbusse über einen jeweiligen Eingang der entsprechenden vertikalen Antriebsgruppe (10, 12, 14, 16) und andererseits mit jeder horizontalen Antriebsgruppe (6, 8) über den jeweiligen Ausgang jeder vertikalen Antriebsgruppe (10, 12, 14, 16) verbunden sind,
- mindestens eine Stromversorgungssteuerung (4), die dazu angeordnet ist, einen Leistungssteuerungsbefehl an die Stromerzeugungsquellen (18, 20) in Abhängigkeit von den Leistungsanforderungen der vertikalen Antriebsgruppen (10, 12, 14, 16) und/oder den horizontalen Antriebsgruppen (6, 8) zu senden, wobei die Stromquellen (50, 60, 80, 90) Strom in Abhängigkeit von der Differenz zwischen den Leistungsanforderungen der vertikalen Antriebsgruppen (10, 12, 14, 16) und/oder der horizontalen Antriebsgruppen (6, 8) und der Leistung liefern, die auf der Grundlage des Leistungssteuerungsbefehls von den Stromerzeugungsquellen (18, 20) abgegeben wird, wobei die Stromerzeugungsquellen (18, 20) ferner dazu geeignet sind, die Stromquellen (50, 60, 80, 90) derart nachzuladen, dass die Stromquellen (50, 60, 80, 90) passiv gesteuert werden.

2. Flugzeug nach Anspruch 1, wobei Batterien die Stromquellen (50, 60, 80, 90) der vertikalen Antriebsgruppen (10, 12, 14, 16) sind.

3. Flugzeug nach Anspruch 1 oder 2, wobei die Stromerzeugungsquellen (18, 20) einen Turbinengenerator (100, 102) und einen Wechselstrom-Gleichstrom-Wandler (104, 106) umfassen.

4. Flugzeug nach Anspruch 1 oder 2, wobei die Stromerzeugungsquellen (18, 20) eine Wasserstoff-Brennstoffzelle (100, 102) und einen Gleichstrom-zu-Gleichstrom-Wandler (104, 106) umfassen.

5. Flugzeug nach einem der vorhergehenden Ansprüche, das ferner elektrische Schaltschütze umfasst, die jede der horizontalen Antriebsgruppen (6, 8), der vertikalen Antriebsgruppen (10, 12, 14, 16) und der Stromerzeugungsquellen (18, 20) mit dem Rest des Stromkreises des Flugzeugs verbinden.

6. Flugzeug nach Anspruch 5, wobei jedes Element jeder der horizontalen Antriebsgruppen (6, 8), der vertikalen Antriebsgruppen (10, 12, 14, 16) und der Stromerzeugungsquellen (18, 20) mit den anderen Elementen der horizontalen Antriebsgruppe (6, 8), der vertikalen Antriebsgruppe (10, 12, 14, 16) und der Stromerzeugungsquelle (18, 20), zu der es gehört, durch ein elektrisches Schaltschütz verbunden ist.

7. Flugzeug nach einem der vorhergehenden Ansprüche, das ferner Dioden am Eingang und/oder am Ausgang jeder der horizontalen Antriebsgruppen (6, 8), der vertikalen Antriebsgruppen (10, 12, 14, 16) und der Stromerzeugungsquellen (18, 20) umfasst, die sie mit den sie verbindenden Stromversorgungsbussen verbinden.

8. Flugzeug nach Anspruch 5 oder 6 in Kombination mit Anspruch 7, wobei die Dioden im Verhältnis zu den Stromerzeugungsquellen vor den Schaltschützen angeordnet sind.

## Claims

1. An aircraft having a hybrid power source comprising:
- at least two horizontal drive thrusters (26, 36) each powered by a respective electric motor (24, 34), forming at least two respective horizontal drive units (6, 8),
- at least four pairs of vertical take-off/landing rotors (42, 44, 46, 48, 72, 74, 76, 78) each powered by a respective electric motor (52, 54, 56, 58, 82, 84, 86, 88), and at least four power sources (50, 60, 80, 90) each connected to a respective electric motor (52, 54, 56, 58, 82, 84, 86, 88) of a pair of vertical take-off/landing rotors (42, 44, 46, 48, 72, 74, 76, 78), each pair of rotors (42, 44, 46, 48, 72, 74, 76, 78) forming with the corresponding respective electric motors (52, 54, 56, 58, 82, 84, 86, 88) and power source a vertical drive unit (10, 12, 14, 16), each vertical drive unit (10, 12, 14, 16) comprising a power supply bus whose output can be connected to a single horizontal drive unit (6, 8), the number of vertical drive units (10, 12, 14, 16) being such that each horizontal drive unit (6, 8) can be connected to at least two vertical drive units (10, 12, 14, 16) via a respective switch (28, 38) disposed at the input of the horizontal drive unit (6, 8),
- at least two power generation sources (18, 20), each connected on the one hand to each of the power supply buses by a respective input of the corresponding vertical drive unit (10, 12, 14, 16), and on the other hand to each horizontal drive unit (6, 8) via the respective output of each vertical drive unit (10, 12, 14, 16),
- at least one power supply command (4) arranged to send a power command to the power generation sources (18, 20) according to the power requirements of the vertical drive units (10, 12, 14, 16) and/or of the horizontal drive units (6, 8), the power sources (50, 60, 80, 90) supplying electricity according to the difference between the power requirements of the vertical drive units (10, 12, 14, 16) and/or of the horizontal drive units (6, 8) and the power emitted by the power generation sources (18, 20) based on the power command, the power generation sources (18, 20) being further suitable for recharging the power sources (50, 60, 80, 90), such that the power sources (50, 60, 80, 90) are passively controlled.

2. The aircraft according to claim 1, wherein the power sources (50, 60, 80, 90) of the vertical drive units (10, 12, 14, 16) are batteries.

3. The aircraft according to claim 1 or 2, wherein the power generation sources (18, 20) comprise a turbine generator (100, 102) and an AC-DC converter (104, 106).

4. The aircraft according to claim 1 or 2, wherein the power generation sources (18, 20) comprise a hydrogen fuel cell (100, 102) and a DC-DC converter (104, 106).

5. The aircraft according to one of the preceding claims, further comprising electrical contactors connecting each of the horizontal drive units (6, 8), of the vertical drive units (10, 12, 14, 16) and of the power generation sources (18, 20) to the rest of the electrical circuit of the aircraft.

6. The aircraft according to claim 5, wherein each element of each of the horizontal drive units (6, 8), of the vertical drive units (10, 12, 14, 16) and of the power generation sources (18, 20) is connected to the other elements of the horizontal drive unit (6, 8), of the vertical drive unit (10, 12, 14, 16) or of the power generation source (18, 20) to which it belongs by an electrical contactor.

7. The aircraft according to one of the preceding claims, further comprising diodes at the input and/or at the output of each of the horizontal drive units (6, 8), of the vertical drive units (10, 12, 14, 16) and of the power generation sources (18, 20) connecting them to the electrical buses that connect them.

8. The aircraft according to claim 5 or 6 considered in combination with claim 7, wherein the diodes are disposed upstream of the contactors with respect to the power generation sources.
